# EUROPÄISCHE PATENTSCHRIFT

(11) **EP 4 186 609 B1**
(45) Veröffentlichungstag und Bekanntmachung des Hinweises auf die Patenterteilung: **26.06.2024**
(21) Anmeldenummer: 22208529.2
(22) Anmeldetag: 21.11.2022
(51) Int. Cl.: B21D 19/04, G01B 11/02, G01B 21/04, B21D 39/02

(54) **FALZ- UND MESSVORRICHTUNG UND VERFAHREN ZUM BETRIEB EINER FALZ- UND MESSVORRICHTUNG**
FOLDING AND MEASURING DEVICE AND METHOD FOR OPERATING A FOLDING AND MEASURING DEVICE
DISPOSITIF DE PLIAGE ET DE MESURE ET PROCÉDÉ DE FONCTIONNEMENT D'UN DISPOSITIF DE PLIAGE ET DE MESURE

(30) Priorität: 25.11.2021 DE 102021130971
(43) Veröffentlichungstag der Anmeldung: 31.05.2023
(73) Patentinhaber: Ebz Systec GmbH, 88212 Ravensburg (DE)
(72) Erfinder: STADLER, Rainer, 88605 Rast (DE); KÜHNER, Benjamin, 88484 Gutenzell (DE)
(74) Vertreter: Otten, Roth, Dobler & Partner mbB Patentanwälte

(56) Entgegenhaltungen:
- WO-A1-2011/113928
- DE-A1-102009 058 817
- DE-U1-202008 003 687
- DE-U1-202015 100 339

## Beschreibung

Die Erfindung betrifft eine Falz- und Messvorrichtung nach Anspruch 1 und ein Verfahren zum Betrieb einer Falz- und Messvorrichtung nach Anspruch 7.

Aus der DE 20 2008 003 687 U1 ist eine Falzeinrichtung für Werkstücke, insbesondere Karosserieteile, bekannt, wobei die Falzeinrichtung mindestens einen mehrachsig beweglichen Manipulator mit mindestens einem mitgeführten Falzwerkzeug aufweist und einen mobilen und an den zu falzenden Werkstückbereich zustellbaren Gegenhalter zum Abstützen der mit dem Falzwerkzeug aufgebrachten Falzkräfte aufweist, wobei der Gegenhalter außerhalb des Werkstücks und extern abstützbar ist.

Aus der DE 20 2015 100 339 U1 ist ein Falzeinrichtung zur Bildung von Falzen an einem Werkstück bekannt, wobei die Falzeinrichtung ein robotergeführtes Falzwerkzeug mit einem Falzmittel und eine Erfassungseinrichtung für den Falzprozess aufweist, wobei die Erfassungseinrichtung eine am Falzwerkzeug angeordnete Kamera aufweist, die mit ihrer Blickrichtung auf die aktuelle Prozessstelle zwischen Falzmittel und Falz gerichtet ist.

Aus der DE 10 2009 058 817 A1 ist eine Anlage zum maßhaltigen Rollfalzen eines Bauteils bekannt. Diese umfasst zumindest eine Rollfalzvorrichtung mit einem Rollfalzkopf, eine Aufnahmevorrichtung für das Bauteil und eine Steuerung für zumindest die Rollfalzvorrichtung mit dem Rollfalzkopf, wobei die Rollfalzvorrichtung und das in der Aufnahmevorrichtung angeordnete Bauteil in zumindest einer Soll-Position zueinander positionierbar sind, wobei eine Führung des Rollfalzkopfs in der Soll-Position entlang einem Verlauf einer vorbestimmten Falzkante des Bauteils durch eine Relativbewegung zwischen der Rollfalzvorrichtung und dem in der Aufnahmevorrichtung angeordneten Bauteil bereitgestellt wird, wobei die Anlage eine mit der Steuerung operativ gekoppelte Sensorvorrichtung umfasst, wobei die Sensorvorrichtung an der Rollfalzvorrichtung oder Aufnahmevorrichtung angeordnet ist und eine Erfassung einer IstPosition der Rollfalzvorrichtung und des in der Aufnahmevorrichtung angeordneten Bauteils bereitstellt, wobei die Sensorvorrichtung einen berührungslos arbeitenden Messaufnehmer umfasst, der den Verlauf der vorbestimmten Falzkante aufnimmt.

Es ist Aufgabe der Erfindung, eine Falz- und Messvorrichtung und ein Verfahren zum Betrieb einer Falz- und Messvorrichtung vorzuschlagen, durch welches eine Dokumentation des Falzvorgangs ermöglicht ist bzw. wird. Weiterhin ist es auch Aufgabe, eine kontinuierliche Verbesserung des Falzvorgangs und damit eine Erhöhung einer Qualität des erstellten Falzes zu ermöglichen.

Diese Aufgabe wird ausgehend von den Merkmalen des Oberbegriffs des Anspruchs 1 bzw. 7 durch die kennzeichnenden Merkmale des Anspruchs 1 bzw. 7 gelöst. In den jeweiligen Unteransprüchen sind vorteilhafte und zweckmäßige Weiterbildungen angegeben.

Die Falz- und Messvorrichtung zum Falzen und Vermessen eines Werkstücks umfasst einen Manipulator mit einem Manipulatorarm, einen an dem Manipulatorarm angeordneten Falzkopf mit einer Falzrolle und ein Gegenfalzelement, wobei die Falz- und Messvorrichtung eine berührungslos arbeitende Messeinrichtung umfasst, wobei das Gegenfalzelement eine Auflagefläche umfasst, auf welcher das Werkstück beim Falzen aufliegt, wobei das Gegenfalzelement einen Referenzbereich umfasst, wobei der Referenzbereich umlaufend um die Auflagefläche angeordnet ist und einen umlaufenden Absatz bildet, wobei die berührungslos arbeitende Messeinrichtung derart ausgerichtet ist, dass diese beim Abrollen der Falzrolle auf dem Werkstück sowohl einen unmittelbar von der Falzrolle hergestellten Falzabschnitt, als auch den Referenzbereich erfasst. Weitere Merkmale der erfindungsgemäßen Falz- und Messvorrichtung sind in Anspruch 1 definiert. Durch eine derartige Falz- und Messvorrichtung ist eine Dokumentation des Falzvorgangs möglich, da ein Verlauf des hergestellten Falzabschnitts anhand seiner Abstände zu einem Verlauf des Referenzbereichs des Gegenfalzelements erfasst wird.

Es ist auch vorgesehen, das Gegenfalzelement als Falzbett auszubilden. Bei einem Falzbett lässt sich ein Referenzbereich baulich einfach realisieren.

Weiterhin ist es vorgesehen, den Referenzbereich mit einer waagrechten Kontaktfläche als Referenzfläche auszubilden, welche parallel zu der Auflagefläche ausgerichtet ist,
- den Referenzbereich weiterhin mit einer ersten senkrechten Kontaktfläche auszubilden, welche senkrecht zu der Auflagefläche ausgerichtet ist und zwischen der Auflagefläche und der waagrechten Kontaktfläche verläuft, und
- den Referenzbereich mit einer zweiten senkrechten Kontaktfläche auszubilden, welche senkrecht zu der Auflagefläche ausgerichtet ist, parallel zu der ersten senkrechten Kontaktfläche ausgerichtet ist und sich an die waagrechte Kontaktfläche anschließt. Ein derartiges Falzbett lässt sich fertigungstechnisch einfach durch einen die Auflagefläche umlaufenden Absatz herstellen. Hierdurch kann das Ergebnis des Falzvorgangs in seiner Qualität bewertet werden.

Es ist auch vorgesehen, die berührungslos arbeitende Messeinrichtung als optischen Geometriesensor auszubilden. Mit einem derartigen Sensor lässt sich mit jedem aufgenommenen Bild sowohl der hergestellte Falz als auch der Referenzbereich erfassen, so dass die Position, welche der hergestellte Falz zu dem Referenzbereich einnimmt aus jedem Bild errechnet werden kann.

Bei dem erfindungsgemäßen Verfahren zum Betrieb einer Falz- und Messvorrichtung, welche nach wenigstens einem der Ansprüche 1 bis 6 ausgebildet ist, ist es vorgesehen
- ein Werkstück derart zu falzen, dass ein Falzkopf mit seiner Falzrolle, welche an einem Manipulatorarm eines Manipulators angeordnet ist und welche von dem Manipulatorarm entlang einer programmierten Falzbahn geführt wird, unter Zwischenlage des Werkstücks auf einer Auflagefläche eines Gegenfalzelements mit einem Falzbett (7) unter Druck abgewälzt wird, so dass das Werkstück umgebogen wird, wobei das Gegenfalzelement einen Referenzbereich mit einem umlaufenden Absatz umfasst, der eine waagrechte Kontaktfläche, eine erste senkrechte Kontaktfläche und eine zweite senkrechte Kontaktfläche aufweist;
- wobei ein erster Abstand, welcher senkrecht zu einer Bewegungsrichtung des Falzkopfes ausgerichtet ist, zwischen der waagrechten Kontaktfläche des Referenzbereichs des Falzbetts und einer von der Falzrolle überfahrenen Biegelasche des Werkstücks in einem ersten Messvorgang gemessen wird,
- wobei einer zweiter Abstand, welcher senkrecht zu der Bewegungsrichtung des Falzkopfes und senkrecht zu dem ersten Abstand ausgerichtet ist, zwischen der zweiten senkrechten Kontaktfläche des Referenzbereichs des Falzbetts und der von der Falzrolle überfahrenen Biegelasche des Werkstücks in einem zweiten Messvorgang gemessen wird,
- wobei ein Packmaß eines erzeugten Falzes als Differenz zwischen dem ersten Abstand und einem dritten Abstand, welcher zwischen der Auflagefläche und der waagrechten Kontaktfläche vorhanden ist, von der Prozessoreinheit errechnet wird,
- wobei ein Überlappungsmaß des erzeugten Falzes als Differenz zwischen dem vierten Abstand und dem zweiten Abstand, welcher zwischen der ersten senkrechten Kontaktfläche und der zweiten senkrechten Kontaktfläche vorhanden ist, von der Prozessoreinheit errechnet wird,
- wobei diese Schritte während des Falzens derart oft wiederholt werden, dass durch die errechneten Packmaße ein IST-Höhenprofil des erzeugten Falzes definiert wird und dass durch die errechneten Überlappungsmaße ein IST-Seitenprofil des erzeugten Falzes definiert wird. Durch ein derartiges Verfahren ist eine Dokumentation des Falzvorgangs möglich, da ein Verlauf des hergestellten Falzabschnitts anhand seiner Abstände zu einem Verlauf des Referenzbereichs des Gegenfalzelements erfasst wird.

Weiterhin ist es vorgesehen, als fünften Abstand durch die Falz- und Messvorrichtung, insbesondere auf Basis von zur Steuerung einer Bewegung des Manipulators verwendeten Koordinaten eine Schrittweite zwischen den Messungen in die Bewegungsrichtung des Falzkopfes zu erfassen. Hierdurch lassen sich gefalzte Werkstücke exakt vergleichen, da die zu vergleichenden Werte mittels der Schrittweiten einander zugeordnet werden können.

Schließlich ist bei dem Verfahren nach Anspruch 5 oder 6 auch vorgesehen,
- das von der Falz- und Messvorrichtung erfasste IST-Höhenprofil mit einem gespeicherten SOLL-Höhenprofil zu vergleiche und bei einer Abweichung des IST-Höhenprofils von dem SOLL-Höhenprofil die programmierte Falzbahn derart anzupassen, dass diese im Bereich abweichender Werte um eine Differenz zwischen IST-Wert und SOLL-Wert in Richtung des SOLL-Höhenprofils korrigiert wird und/oder
- das von der Falz- und Messvorrichtung erfasste IST-Seitenprofil mit einem gespeicherten SOLL-Seitenprofil zu vergleichen und bei einer Abweichung des IST-Seitenprofils von dem SOLL-Seitenprofil die programmierte Falzbahn derart anzupassen, dass diese im Bereich abweichender Werte um eine
Differenz zwischen IST-Wert und SOLL-Wert in Richtung des SOLL-Seitenprofils korrigiert wird. Hierdurch ist eine kontinuierliche Verbesserung des Falzvorgangs und damit eine Erhöhung einer Qualität des erstellten Falzes möglich, da der Verlauf des hergestellten Falzes anhand seiner Abstände zu dem Verlauf des Referenzbereichs bewertet werden und nachgeregelt werden kann. Durch die IST-Werte für die Packmaße und die Überlappungsmaße steht eine dreidimensionale Kontur des gefalzten Werkstücks zur Verfügung.

Weiterhin ist es vorgesehen während des Falzens zu messen. Hierdurch ist ein rationeller Fertigungsablauf gewährleistet.

Es ist auch vorgesehen, nach dem Falzen zu messen und hierzu nach dem Falzen eine Messfahrt durchzuführen. Hierdurch wird sichergestellt, dass weder die Messungen durch den Falzvorgang ungewünscht beeinflusst werden, noch dass der Falzvorgang durch die Messungen beeinflusst wird.

Weitere Einzelheiten der Erfindung werden in der Zeichnung anhand von schematisch dargestellten Ausführungsbeispielen beschrieben.

Hierbei zeigen:
- Figur 1:: eine schematische Darstellung einer Falz- und Messvorrichtung zum Falzen und Vermessen eines Werkstücks;
- Figur 2:: eine weitere schematische Darstellung der aus der Figur 1 bekannten Falz- und Messvorrichtung bei teilweise ausgeblendeten Komponenten und
- Figur 3:: eine Einzelansicht einer in der Figur 2 gezeigten Kontur.

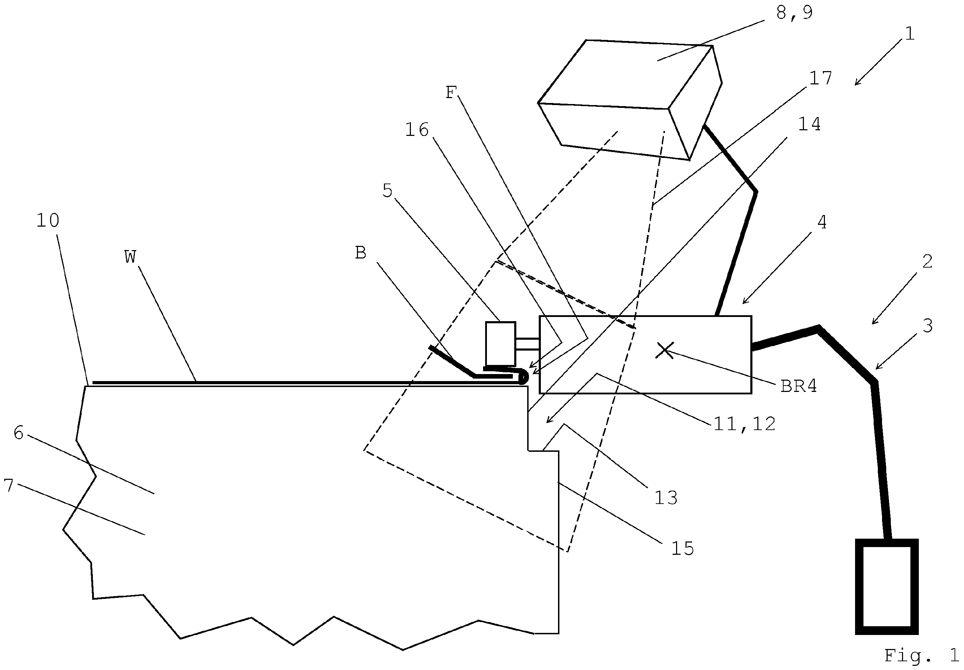

In der Figur 1 ist eine Falz- und Messvorrichtung 1 zum Falzen und Vermessen eines Werkstücks W in schematischer Darstellung gezeigt.

Die Falz- und Messvorrichtung 1 umfasst einen Manipulator 2 mit einem mehrgelenkigen Manipulatorarm 3, einen an dem Manipulatorarm 3 angeordneten Falzkopf 4 mit einer Falzrolle 5 und ein Gegenfalzelement 6. Hierbei ist das Gegenfalzelement 6 als Falzbett 7 ausgebildet.

Die Falz- und Messvorrichtung 1 umfasst weiterhin eine berührungslos arbeitende Messeinrichtung 8, welche als optischer Geometriesensor 9 ausgebildet ist.

Das Gegenfalzelement 6 umfasst eine Auflagefläche 10, auf welcher das Werkstück W beim Falzen aufliegt. Das Werkstück W wird um ein Blech B gefalzt, welches auf dem Werkstück W liegt.

Weiterhin umfasst das Gegenfalzelement 6 einen Referenzbereich 11. Dieser ist als um die Auflagefläche 9 umlaufender Absatz 12 ausgebildet. Das Gegenfalzelement 6 ist geschnitten und nur teilweise dargestellt. Der Referenzbereich 11 umfasst eine waagrechte Kontaktfläche 13, welche parallel zu der Auflagefläche 9 ausgerichtet ist. Weiterhin umfasst der Referenzbereich 11 eine erste senkrechte Kontaktfläche 14, welche zwischen der Auflagefläche 9 und der waagrechten Kontaktfläche 13 angeordnet ist. Schließlich umfasst der Referenzbereich 11 noch eine zweite senkrechte Kontaktfläche 15, welche parallel zu der ersten senkrechten Kontaktfläche 14 ausgerichtet ist und sich an die waagrechte Kontaktfläche 13 anschließt.

Die berührungslos arbeitende Messeinrichtung 8 ist beim Falzen immer derart ausgerichtet, dass diese beim Abrollen der Falzrolle 5 auf dem Werkstück W sowohl einen unmittelbar von der Falzrolle 5 hergestellten Falzabschnitt 16 eines Falzes F, als auch den benachbart zu dem Falzabschnitt 16 liegenden Referenzbereich 11 erfasst. Hierzu ist die Messeinrichtung 8 mit dem Falzkopf 4 verbunden und wird von dem Manipulator zusammen mit dem Falzkopf 4 bewegt.

Mit gestrichelten Linien, welche von der Messeinrichtung ausgehen, ist ein Bilderfassungsbereich 17 eines nicht dargestellten optischen Sensors angedeutet, in welchem die Messeinrichtung 8 das Werkstück W und das Falzbett 7 erfasst.

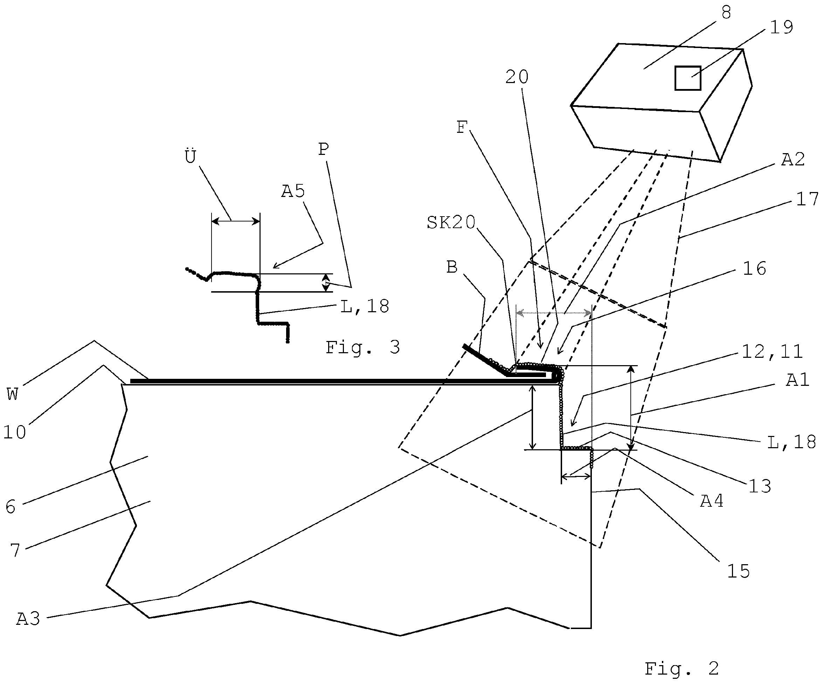

In der Figur 2 ist die Figur 1 teilweise nochmals dargestellt, wobei zur Erhaltung der Übersichtlichkeit auf eine Darstellung des Manipulators und des Falzkopfes mit Ausnahme der Messeinrichtung 8 verzichtet wurde. Mit einer sich über das Blech B, den Falzabschnitt 16 des Werkstücks W und den Absatz 12 des Falzbetts 7 erstreckende Linie L, welche durch eine Vielzahl aneinander liegender kleiner Kreisringe symbolisiert ist, ist eine in dem Bilderfassungsbereich 17 liegende Kontur 18 angedeutet, welche von einer Prozessoreinheit 19 aus jedem Bild errechnet wird.

Wie oben beschrieben wird das Werkstück W derart gefalzt, dass der Falzkopf 4 mit seiner Falzrolle 5, welche an dem Manipulatorarm 3 des Manipulators 2 angeordnet ist und welche von dem Manipulatorarm 3 entlang einer programmierten Falzbahn, welche die Auflagefläche 10 umläuft, geführt wird (siehe auch Figur 1). Dies erfolgt unter Zwischenlage des Werkstücks W, auf welchem sich der Falzkopf 4 mit Druck abwälzt, so dass das Werkstück W um das Blech B gebogen wird.

Auf der Basis eines jeden von der Messeinrichtung 8 beim Falzen erfassten Bildes wird von der Prozessoreinrichtung 19 ein erster Abstand A1 zwischen der waagrechten Kontaktfläche 13 des Referenzbereichs 11 des Falzbetts 7 und einer von der in der Figur 2 ausgeblendeten Falzrolle 5 überfahrenen Biegelasche 20 des Werkstücks W in einem ersten Messvorgang gemessen. Hierbei ist der elektronisch gemessene Abstand A1 senkrecht zu einer in die Zeichnungsebene hinein verlaufenden Bewegungsrichtung BR4 (siehe Figur 1) des in der Figur 2 ausgeblendeten Falzkopfes 4 ausgerichtet.

Weiterhin wird auf der Basis eines jeden von der Messeinrichtung 8 erfassten Bildes von der Prozessoreinrichtung 19 ein zweiter Abstand A2 zwischen der zweiten senkrechten Kontaktfläche 15 des Referenzbereichs 11 des Falzbetts 7 und einer Seitenkante SK20 der von der Falzrolle 5 überfahrenen Biegelasche 20 des Werkstücks W in einem zweiten Messvorgang gemessen. Hierbei ist der elektronisch gemessene Abstand A2 senkrecht zu der Bewegungsrichtung BR4 (siehe Figur 1) des Falzkopfes 4 und senkrecht zu dem ersten Abstand A1 ausgerichtet.

Anschließend wird auf der Basis eines in der Prozessoreinheit 19 bereits gespeicherten, gleich bleibenden dritten Abstands A3, welchen die waagrechten Kontaktfläche 13 zu der Auflagefläche 10 aufweist, ein Packmaß P des erzeugten Falzes F errechnet (siehe Figur 3). Hierzu wird der dritte Abstand A3 von dem ersten Abstand A1 subtrahiert. In der Figur 3 ist die in der Figur 2 durch die Linie L symbolisierte Kontur 18 zur Verdeutlichung nochmals in Alleinstellung gezeigt.

Weiterhin wird auf der Basis eines in der Prozessoreinheit gespeicherten, da gleich bleibenden vierten Abstands A4, welchen die erste waagrechte Kontaktfläche 14 und die zweite waagrechte Kontaktfläche 15 zueinander aufweisen, ein Überlappungsmaß Ü des erzeugten Falzes F errechnet. Hierzu wird der vierte Abstand A4 von dem zweiten Abstand A2 subtrahiert.

Auf Grund der durch den Absatz 12 des Falzbetts 7 fix definierten Abstände A4 und A3 kann die Messeinrichtung 8 mit dem optischen Geometriesensensor 19 in fast jeder Lage die Berechnung sicher durchführen. Der Abstand bzw. die Kippung des Geometriesensors 19 gegenüber dem Falzbett 7 ist hierbei unerheblich solange sich die den Absatz 12 bildenden Kontaktflächen 13, 14, welche die Abstände A4 und A3 definieren, in einem Sichtfeld des Geometriesensors 19 befinden. Die Bestimmung der Abstände A1 und A2 und hieraus die Bestimmung des Packmaßes P und des Überlappungsmaßes Ü erfolgt nämlich immer in Relation zu den bekannten Abständen A4 und A3. Hierdurch ist eine freie Programmierung bzw. Anstellung des Falzkopfes 4 zu dem das Bauteil bildenden Blech B ermöglicht.

Die beschriebenen Schritte werden während des Falzens derart oft wiederholt werden, dass durch die errechneten Packmaße P ein IST-Höhenprofil des erzeugten Falzes definiert wird und dass durch die errechneten Überlappungsmaße Ü ein IST-Seitenprofil des erzeugten Falzes definiert wird.

Von der Prozessoreinheit 19 wird als fünfter Abstand A5 eine Schrittweite zwischen den Messungen in die Bewegungsrichtung BR4 (siehe Figur 1) des Falzkopfes 4 erfasst.

Beim Falzen eines weiteren Werkstücks, welches mit einem zuvor zum durch einen Falzvorgang bearbeiteten Werkstück identisch ist, ist es vorgesehen, dass vor Beginn des Falzvorgangs
- das von der Prozessoreinheit erfasste IST-Höhenprofil mit einem gespeicherten SOLL-Höhenprofil verglichen wird und dass bei einer Abweichung des IST-Höhenprofils von dem SOLL-Höhenprofil die programmierte Falzbahn derart angepasst wird, dass diese im Bereich abweichender Werte um eine Differenz zwischen IST-Wert und SOLL-Wert in Richtung des SOLL-Höhenprofils korrigiert wird und/oder
- das von der Prozessoreinheit erfasste IST-Seitenprofil mit einem gespeicherten SOLL-Seitenprofil verglichen wird und dass bei einer Abweichung des IST-Seitenprofils von dem SOLL-Seitenprofil die programmierte Falzbahn derart angepasst wird, dass diese im Bereich abweichender Werte um eine Differenz zwischen IST-Wert und SOLL-Wert in Richtung des SOLL-Seitenprofils korrigiert wird.

Selbstverständlich sieht die Erfindung auch vor, alternativ zu den Abständen A1 bis A4 andere oder teilweise andere Abstände zur Ermittlung eines IST-Höhenprofils und eines IST-Seitenprofils aus den einzelnen Bildern zu messen, aus welchen sich zusammen mit dem Abstand A5 ein dreidimensionales Bild des erzeugten Falzes F ergibt.

### Bezugszeichenliste:

- 1: Falz- und Messvorrichtung
- 2: Manipulator
- 3: Manipulatorarm
- 4: Falzkopf
- 5: Falzrolle
- 6: Gegenfalzelement
- 7: Falzbett
- 8: Messeinrichtung
- 9: optischer Geometriesensor
- 10: Auflagefläche
- 11: Referenzbereich
- 12: umlaufender Absatz
- 13: waagrechte Kontaktfläche von 11
- 14: erste senkrechte Kontaktfläche von 11
- 15: zweite senkrechte Kontaktfläche von 11
- 16: Falzabschnitt
- 17: Bilderfassungsbereich von 8
- 18: Kontur in 17
- 19: Prozessoreinheit
- 20: Biegelasche

- A1: erster Abstand zwischen 13 und 20
- A2: zweiter Abstand zwischen 15 und SK20
- A3: dritter Abstand zwischen 13 und 10
- A4: vierter Abstand zwischen 14 und 15
- A5: fünfter Abstand
- B: Blech
- BR4: Bewegungsrichtung von 4
- F: Falz
- L: Linie
- P: Packmaß
- SK20: Seitenkante von 20
- Ü: Überlappungsmaß
- W: Werkstück

## Patentansprüche

1. Falz- und Messvorrichtung (1) zum Falzen und Vermessen eines Werkstücks (W),
- wobei die Falz- und Messvorrichtung (1) einen Manipulator (2) mit einem Manipulatorarm (3), einen an dem Manipulatorarm (3) angeordneten Falzkopf (4) mit einer Falzrolle (5) und ein Gegenfalzelement (6) mit einem Falzbett (7) umfasst,
- wobei die Falz- und Messvorrichtung (1) eine berührungslos arbeitende Messeinrichtung (8) umfasst,
- wobei das Gegenfalzelement (6) eine Auflagefläche (10) umfasst, auf welcher das Werkstück (W) beim Falzen aufliegt, **dadurch gekennzeichnet,**
- **dass** das Gegenfalzelement (6) einen Referenzbereich (11) umfasst,
- **dass** der Referenzbereich (11) umlaufend um die Auflagefläche (10) angeordnet ist und einen umlaufenden Absatz (12) bildet, wobei der Referenzbereich (11) eine waagrechte Kontaktfläche (13), eine erste senkrechte Kontaktfläche(14) und eine zweite senkrechte Kontaktfläche (15) aufweist, die den Absatz (12) bilden,
- **dass** die berührungslos arbeitende Messeinrichtung (8) derart ausgerichtet ist, dass diese beim Abrollen der Falzrolle (5) auf dem Werkstück (W) sowohl einen unmittelbar von der Falzrolle (5) hergestellten Falzabschnitt (16), als auch den Referenzbereich (11) erfasst,
- **dass** durch den Absatz (12) des Falzbetts (7) ein vierter Abstand (A4) und ein dritter Abstand (A3) derart fix definiert sind, dass die Messeinrichtung (8) mit einem optischen Geometriesensensor (19) in fast jeder Lage die Berechnung sicher durchführen kann,
- **dass** die Falz- und Messvorrichtung eine Prozessoreinheit (19) umfasst, wobei auf der Basis des in der Prozessoreinheit (19) bereits gespeicherten, gleich bleibenden dritten Abstands (A3), welchen die waagrechten Kontaktfläche (13) zu der Auflagefläche (10) aufweist, ein Packmaß (P) des erzeugten Falzes (F) von der Prozessoreinheit (19) errechnet wird,
- wobei auf der Basis des in der Prozessoreinheit (19) gespeicherten, da gleich bleibenden vierten Abstands (A4), welchen die erste senkrechte Kontaktfläche (14) und die zweite senkrechte Kontaktfläche (15) zueinander aufweisen, ein Überlappungsmaß (Ü) des erzeugten Falzes (F) von der Prozessoreinheit (19) errechnet wird.

2. Falz- und Messvorrichtung (1) nach Anspruch 1, **dadurch gekennzeichnet, dass** das Gegenfalzelement (6) als Falzbett (7) ausgebildet ist.

3. Falz- und Messvorrichtung (1) nach wenigstens einem der vorhergehenden Ansprüche, **dadurch gekennzeichnet,**
- **dass** der Referenzbereich (11) eine waagrechte Kontaktfläche (13) umfasst, welche parallel zu der Auflagefläche (10) ausgerichtet ist,
- **dass** der Referenzbereich (11) eine erste senkrechte Kontaktfläche (14) umfasst, welche senkrecht zu der Auflagefläche (10) ausgerichtet ist und zwischen der Auflagefläche (10) und der waagrechten Kontaktfläche (13) verläuft, und
- **dass** der Referenzbereich (11) eine zweite senkrechte Kontaktfläche (15) umfasst, welche senkrecht zu der Auflagefläche (10) ausgerichtet ist, welche parallel zu der ersten senkrechten Kontaktfläche (14) ausgerichtet ist und welche sich an die waagrechte Kontaktfläche (13) anschließt.

4. Falz- und Messvorrichtung (1) nach wenigstens einem der vorhergehenden Ansprüche, **dadurch gekennzeichnet, dass** die berührungslos arbeitende Messeinrichtung (8) als optischer Geometriesensor (9) ausgebildet ist.

5. Falz- und Messvorrichtung (1) nach wenigstens einem der vorhergehenden Ansprüche, **dadurch gekennzeichnet, dass** diese derart ausgebildet ist, dass ein Abstand bzw. eine Kippung des Geometriesensors (19) gegenüber dem Falzbett (7) unerheblich ist, solange sich den Absatz (12) bildenden Kontaktflächen (13, 14), welche den vierten Abstand (A4) und den dritten Abstand (A3) definieren, in einem Sichtfeld des Geometriesensors (19) befinden.

6. Falz- und Messvorrichtung (1) nach wenigstens einem der vorhergehenden Ansprüche, **dadurch gekennzeichnet, dass** diese derart ausgebildet ist, dass die Bestimmung eines ersten Abstands (A1) und eines zweiten Abstands (A2) und hieraus die Bestimmung eines Packmaßes (P) und eines Überlappungsmaßes (Ü) immer in Relation zu dem bekannten vierten Abstand (A4) und dem bekannten dritten Abstand (A3) erfolgt, derart dass eine freie Programmierung bzw. Anstellung des Falzkopfes (4) zu dem das Bauteil bildenden Blech (B) ermöglicht ist.

7. Verfahren zum Betrieb einer Falz- und Messvorrichtung (1), welche insbesondere nach wenigstens einem der vorhergehenden Ansprüche ausgebildet ist,
- wobei ein Werkstück (W) derart gefalzt wird, dass ein Falzkopf (4) mit seiner Falzrolle (5), welche an einem Manipulatorarm (3) eines Manipulators (2) angeordnet ist und welche von dem Manipulatorarm (3) entlang einer programmierten Falzbahn geführt wird, unter Zwischenlage des Werkstücks (W) auf einer Auflagefläche (10) eines Gegenfalzelements (6) mit einem Falzbett (7) unter Druck abgewälzt wird, so dass das Werkstück (W) umgebogen wird, wobei das Gegenfalzelement (6) einen Referenzbereich (11) mit einem umlaufenden Absatz (12) umfasst, der eine waagrechte Kontaktfläche (13), eine erste senkrechte Kontaktfläche(14) und eine zweite senkrechte Kontaktfläche (15) aufweist;
- wobei ein erster Abstand (A1), welcher senkrecht zu einer Bewegungsrichtung (BR4) des Falzkopfes (4) ausgerichtet ist, zwischen der waagrechten Kontaktfläche (13) des Referenzbereichs (11) des Falzbetts (7) und einer von der Falzrolle (5) überfahrenen Biegelasche (20) des Werkstücks (W) in einem ersten Messvorgang gemessen wird,
- wobei ein zweiter Abstand (A2), welcher senkrecht zu der Bewegungsrichtung (BR4) des Falzkopfes (4) und senkrecht zu dem ersten Abstand (A1) ausgerichtet ist, zwischen der zweiten senkrechten Kontaktfläche (15) des Referenzbereichs (11) des Falzbetts (7) und der von der Falzrolle (5) überfahrenen Biegelasche (20) des Werkstücks (W) in einem zweiten Messvorgang gemessen wird,
- wobei ein Packmaß (P) eines erzeugten Falzes (F) als Differenz zwischen dem ersten Abstand (A1) und einem dritten Abstand (A3), welcher zwischen der Auflagefläche (10) und der waagrechten Kontaktfläche (13) vorhanden ist, von der Prozessoreinheit (19) errechnet wird,
- wobei ein Überlappungsmaß (Ü) des erzeugten Falzes (F) als Differenz zwischen dem vierten Abstand (A4) und dem zweiten Abstand (A2), welcher zwischen der ersten senkrechten Kontaktfläche (14) und der zweiten senkrechten Kontaktfläche (15) vorhanden ist, von der Prozessoreinheit (19) errechnet wird,
- wobei diese Schritte während des Falzens derart oft wiederholt werden, dass durch die errechneten Packmaße (P) ein IST-Höhenprofil des erzeugten Falzes (F) definiert wird und dass durch die errechneten Überlappungsmaße (Ü) ein IST-Seitenprofil des erzeugten Falzes (F) definiert wird.

8. Verfahren nach Anspruch 7, **dadurch gekennzeichnet, dass** von der Falz- und Messvorrichtung (1), insbesondere auf Basis von zur Steuerung einer Bewegung des Manipulators (2) verwendeten Koordinaten als fünfter Abstand (A5) eine Schrittweite zwischen den Messungen in die Bewegungsrichtung (BR4) des Falzkopfes (4) erfasst wird.

9. Verfahren nach Anspruch 7 oder 8, **dadurch gekennzeichnet,**
- **dass** das von der Falz- und Messvorrichtung (1) erfasste IST-Höhenprofil mit einem gespeicherten SOLL-Höhenprofil verglichen wird und dass bei einer Abweichung des IST-Höhenprofils von dem SOLL-Höhenprofil die programmierte Falzbahn derart angepasst wird, dass diese im Bereich abweichender Werte um eine Differenz zwischen IST-Wert und SOLL-Wert in Richtung des SOLL-Höhenprofils korrigiert wird und/oder
- **dass** das von der Falz- und Messvorrichtung (1) erfasste IST-Seitenprofil mit einem gespeicherten SOLL-Seitenprofil verglichen wird und dass bei einer Abweichung des IST-Seitenprofils von dem SOLL-Seitenprofil die programmierte Falzbahn derart angepasst wird, dass diese im Bereich abweichender Werte um eine Differenz zwischen IST-Wert und SOLL-Wert in Richtung des SOLL-Seitenprofils korrigiert wird.

10. Verfahren nach wenigstens einem der Ansprüche 7 bis 9, **dadurch gekennzeichnet, dass** während des Falzens gemessen wird.

11. Verfahren nach wenigsten einem der Ansprüche 7 bis 9, **dadurch gekennzeichnet, dass** nach dem Falzen gemessen wird und hierzu nach dem Falzen eine Messfahrt durchgeführt wird.

## Claims

1. Folding and measuring device (1) for folding and measuring a workpiece (W),
- wherein the folding and measuring device (1) comprises a manipulator (2) having a manipulator arm (3), a folding head (4), arranged on the manipulator arm (3) and having a folding roller (5), and a counter-folding element (6) having a folding bed (7),
- wherein the folding and measuring device (1) comprises a contactlessly operating measuring device (8),
- wherein the counter-folding element (6) comprises a bearing surface (10), on which the workpiece (W) rests during the folding,
**characterized**
- **in that** the counter-folding element (6) comprises a reference area (11),
- **in that** the reference area (11) is arranged peripherally around the bearing surface (10) and forms a peripheral shoulder (12), wherein the reference area (11) has a horizontal contact surface (13), a first vertical contact surface (14) and a second vertical contact surface (15), which form the shoulder (12),
- **in that** the contactlessly operating measuring device (8) is aligned in such a way that, when the folding roller (5) is rolling on the workpiece (W), it senses both a folding portion (16), produced directly by the folding roller (5), and the reference area (11),
- **in that** a fourth distance (A4) and a third distance (A3) are defined by the shoulder (12) of the folding bed (7) as fixed in such a way that the measuring device (8) can reliably carry out the calculation with an optical geometry sensor (19) in almost every position,
- **in that** the folding and measuring device comprises a processor unit (19), wherein, on the basis of the constant third distance (A3), already stored in the processor unit (19) and representing the distance from the horizontal contact surface (13) to the bearing surface (10), a packing dimension (P) of the fold (F) created is calculated by the processor unit (19),
- wherein, on the basis of the constant fourth distance (A4), already stored in the processor unit (19) and representing the distance between the first vertical contact surface (14) and the second vertical contact surface (15), an overlapping dimension (U) of the fold (F) created is calculated by the processor unit (19).

2. Folding and measuring device (1) according to Claim 1, **characterized in that** the counter-holding element (6) is formed as a folding bed (7).

3. Folding and measuring device (1) according to at least one of the preceding claims, **characterized**
- **in that** the reference area (11) comprises a horizontal contact surface (13), which is aligned parallel to the bearing surface (10),
- **in that** the reference area (11) comprises a first vertical contact surface (14), which is aligned vertically in relation to the bearing surface (10) and extends between the bearing surface (10) and the horizontal contact surface (13), and
- **in that** the reference area (11) comprises a second vertical contact surface (15), which is aligned vertically in relation to the bearing surface (10), is aligned parallel to the first vertical contact surface (14) and adjoins the horizontal contact surface (13).

4. Folding and measuring device (1) according to at least one of the preceding claims, **characterized in that** the contactlessly operating measuring device (8) is formed as an optical geometry sensor (9).

5. Folding and measuring device (1) according to at least one of the preceding claims, **characterized in that** it is formed in such a way that a distance or a tilting of the geometry sensor (19) with respect to the folding bed (7) is inconsequential as long as the contact surfaces (13, 14) forming the shoulder (12), which define the fourth distance (A4) and the third distance (A3), are in a field of view of the geometry sensor (19).

6. Folding and measuring device (1) according to at least one of the preceding claims, **characterized in that** it is formed in such a way that the determination of a first distance (A1) and a second distance (A2), and from them the determination of a packing dimension (P) and an overlapping dimension (U), always takes place in relation to the known fourth distance (A4) and the known third distance (A3) in such a way that a free programming or adjustment of the folding head (4) in relation to the metal sheet (B) forming the component is made possible.

7. Method for operating a folding and measuring device (1) which is in particular formed according to at least one of the preceding claims,
- wherein a workpiece (W) is folded by being rolled over under pressure by the folding roller (5) of a folding head (4) arranged on a manipulator arm (3) of a manipulator (2) and guided by the manipulator arm (3) along a programmed folding path, with the workpiece (W) in between, on a bearing surface (10) of the counter-folding element (6) having a folding bed (7), so that the workpiece (W) is bent over, wherein the counter-folding element (6) comprises a reference area (11) having a peripheral shoulder (12), which has a horizontal contact surface (13), a first vertical contact surface (14) and a second vertical contact surface (15);
- wherein a first distance (A1), which is aligned vertically in relation to a direction of movement (BR4) of the folding head (4), between the horizontal contact surface (13) of the reference area (11) of the folding bed (7) and a bending tab (20) of the workpiece (W) that is run over by the folding roller (5), is measured in a first measuring operation,
- wherein a second distance (A2), which is aligned vertically in relation to the direction of movement (BR4) of the folding head (4) and vertically in relation to the first distance (A1), between the second vertical contact surface (15) of the reference area (11) of the folding bed (7) and the bending tab (20) of the workpiece (W) that is run over by the folding roller (5), is measured in a second measuring operation,
- wherein a packing dimension (P) of a fold (F) created is calculated by the processor unit (19) as the difference between the first distance (A1) and a third distance (A3), which is present between the bearing surface (10) and the horizontal contact surface (13),
- wherein an overlapping dimension (U) of the fold (F) created is calculated by the processor unit (19) as the difference between the fourth distance (A4) and the second distance (A2), which is present between the first vertical contact surface (14) and the second vertical contact surface (15),
- wherein these steps are repeated during the folding often enough that an ACTUAL height profile of the fold (F) created is defined by the calculated packing dimensions (P) and that an ACTUAL side profile of the fold (F) created is defined by the calculated overlapping dimensions (U).

8. Method according to Claim 7, **characterized in that** an increment between the measurements in the direction of movement (BR4) of the folding head (4) is sensed by the folding and measuring device (1) as a fifth distance (A5), in particular on the basis of coordinates used for controlling a movement of the manipulator (2).

9. Method according to Claim 7 or 8, **characterized**
- **in that** the ACTUAL height profile sensed by the folding and measuring device (1) is compared with a stored SETPOINT height profile and in that, if there is a deviation of the ACTUAL height profile from the SETPOINT height profile, the programmed folding path is adapted in such a way that it is corrected in the region of deviating values by a difference between the ACTUAL value and the SETPOINT value in the direction of the SETPOINT height profile and/or
- **in that** the ACTUAL side profile sensed by the folding and measuring device (1) is compared with a stored SETPOINT side profile and in that, if there is a deviation of the ACTUAL side profile from the SETPOINT side profile, the programmed folding path is adapted in such a way that it is corrected in the region of deviating values by a difference between the ACTUAL value and the SETPOINT value in the direction of the SETPOINT side profile.

10. Method according to at least one of Claims 7 to 9, **characterized in that** measuring is performed during the folding.

11. Method according to at least one of Claims 7 to 9, **characterized in that** measuring is performed after the folding and for this purpose a measuring run is carried out after the folding.

## Revendications

1. Dispositif de pliage et de mesure (1) pour plier et mesurer une pièce (W),
- le dispositif de pliage et de mesure (1) comprenant un manipulateur (2) avec un bras de manipulateur (3), une tête de pliage (4) agencée sur le bras de manipulateur (3) avec un rouleau de pliage (5) et un contre-élément de pliage (6) avec un lit de pliage (7),
- le dispositif de pliage et de mesure (1) comprenant un appareil de mesure (8) fonctionnant sans contact,
- le contre-élément de pliage (6) comprenant une surface d'appui (10) sur laquelle la pièce (W) s'appuie lors du pliage,
**caractérisé**
- **en ce que** le contre-élément de pliage (6) comprend une zone de référence (11),
- **en ce que** la zone de référence (11) est agencée de manière périphérique autour de la surface d'appui (10) et forme un épaulement périphérique (12), la zone de référence (11) présentant une surface de contact horizontale (13), une première surface de contact verticale (14) et une deuxième surface de contact verticale (15) qui forment l'épaulement (12),
- **en ce que** l'appareil de mesure (8) fonctionnant sans contact est orienté de telle sorte que, lors du roulement du rouleau de pliage (5) sur la pièce (W), il détecte aussi bien une section de pliage (16) réalisée directement par le rouleau de pliage (5) que la zone de référence (11),
- **en ce qu'**une quatrième distance (A4) et une troisième distance (A3) sont définies de manière fixe par l'épaulement (12) du lit de pliage (7) de telle sorte que l'appareil de mesure (8) peut effectuer le calcul de manière sûre dans presque toutes les positions avec un capteur géométrique optique (19),
- **en ce que** le dispositif de pliage et de mesure comprend une unité de traitement (19) ; sur la base de la troisième distance (A3) restant constante déjà enregistrée dans l'unité de traitement (19), que présente la surface de contact horizontale (13) par rapport à la surface d'appui (10), une mesure de tassement (P) du pli (F) produit étant calculée par l'unité de traitement (19),
- sur la base de la quatrième distance (A4) restant constante enregistrée dans l'unité de traitement (19), que présente la première surface de contact verticale (14) et la deuxième surface de contact verticale (15) l'une par rapport à l'autre, une mesure de chevauchement (Ü) du pli (F) produit étant calculée par l'unité de traitement (19).

2. Dispositif de pliage et de mesure (1) selon la revendication 1, **caractérisé en ce que** le contre-élément de pliage (6) est configuré sous forme de lit de pliage (7) .

3. Dispositif de pliage et de mesure (1) selon au moins l'une quelconque des revendications précédentes, **caractérisé**
- **en ce que** la zone de référence (11) comprend une surface de contact horizontale (13) qui est orientée parallèlement à la surface d'appui (10),
- **en ce que** la zone de référence (11) comprend une première surface de contact verticale (14) qui est orientée perpendiculairement à la surface d'appui (10) et s'étend entre la surface d'appui (10) et la surface de contact horizontale (13), et
- **en ce que** la zone de référence (11) comprend une deuxième surface de contact verticale (15) qui est orientée perpendiculairement à la surface d'appui (10), qui est orientée parallèlement à la première surface de contact verticale (14) et qui se raccorde à la surface de contact horizontale (13).

4. Dispositif de pliage et de mesure (1) selon au moins l'une quelconque des revendications précédentes, **caractérisé en ce que** l'appareil de mesure (8) fonctionnant sans contact est configuré sous forme de capteur géométrique optique (9).

5. Dispositif de pliage et de mesure (1) selon au moins l'une quelconque des revendications précédentes, **caractérisé en ce qu'**il est configuré de telle sorte qu'une distance ou un basculement du capteur géométrique (19) par rapport au lit de pliage (7) est négligeable tant que les surfaces de contact (13, 14) formant l'épaulement (12), qui définissent la quatrième distance (A4) et la troisième distance (A3), se trouvent dans un champ de vision du capteur géométrique (19).

6. Dispositif de pliage et de mesure (1) selon au moins l'une quelconque des revendications précédentes, **caractérisé en ce qu'**il est configuré de telle sorte que la détermination d'une première distance (A1) et d'une deuxième distance (A2) et, à partir de là, la détermination d'une mesure de tassement (P) et d'une mesure de chevauchement (Ü) s'effectuent toujours par rapport à la quatrième distance connue (A4) et à la troisième distance connue (A3), de telle sorte qu'une programmation ou un positionnement libre de la tête de pliage (4) par rapport à la tôle (B) formant le composant est possible.

7. Procédé d'exploitation d'un dispositif de pliage et de mesure (1), qui est configuré notamment selon au moins l'une quelconque des revendications précédentes,
- dans lequel une pièce (W) est pliée de telle sorte qu'une tête de pliage (4) avec son rouleau de pliage (5), qui est agencée sur un bras de manipulateur (3) d'un manipulateur (2) et qui est guidée par le bras de manipulateur (3) le long d'une trajectoire de pliage programmée, est roulée sous pression avec interposition de la pièce (W) sur une surface d'appui (10) d'un contre-élément de pliage (6) avec un lit de pliage (7), de telle sorte que la pièce (W) est recourbée, le contre-élément de pliage (6) comprenant une zone de référence (11) avec un épaulement périphérique (12) qui présente une surface de contact horizontale (13), une première surface de contact verticale (14) et une deuxième surface de contact verticale (15) ;
- dans lequel une première distance (A1), qui est orientée perpendiculairement à une direction de déplacement (BR4) de la tête de pliage (4), entre la surface de contact horizontale (13) de la zone de référence (11) du lit de pliage (7) et une languette de pliage (20) de la pièce (W) sur laquelle le rouleau de pliage (5) est passé est mesurée lors d'une première opération de mesure,
- dans lequel une deuxième distance (A2), qui est orientée perpendiculairement à la direction de déplacement (BR4) de la tête de pliage (4) et perpendiculairement à la première distance (A1), entre la deuxième surface de contact verticale (15) de la zone de référence (11) du lit de pliage (7) et la languette de pliage (20) de la pièce (W) sur laquelle le rouleau de pliage (5) est passé, est mesurée lors d'une deuxième opération de mesure,
- dans lequel une mesure de tassement (P) d'un pli (F) produit est calculée par l'unité de traitement (19) en tant que différence entre la première distance (A1) et une troisième distance (A3) qui est présente entre la surface d'appui (10) et la surface de contact horizontale (13),
- dans lequel une mesure de chevauchement (Ü) du pli (F) produit est calculée par l'unité de traitement (19) en tant que différence entre la quatrième distance (A4) et la deuxième distance (A2), qui est présente entre la première surface de contact verticale (14) et la deuxième surface de contact verticale (15),
- dans lequel ces étapes sont répétées pendant le pliage un nombre de fois tel qu'un profil de hauteur RÉEL du pli (F) produit est défini par les mesures de tassement (P) calculées et qu'un profil latéral RÉEL du pli (F) produit est défini par les mesures de chevauchement (Ü) calculées.

8. Procédé selon la revendication 7, **caractérisé en ce qu'**un pas entre les mesures dans la direction de déplacement (BR4) de la tête de pliage (4) est détecté par le dispositif de pliage et de mesure (1) en tant que cinquième distance (A5), notamment sur la base de coordonnées utilisées pour commander un déplacement du manipulateur (2).

9. Procédé selon la revendication 7 ou 8, **caractérisé**
- **en ce que** le profil de hauteur RÉEL détecté par le dispositif de pliage et de mesure (1) est comparé à un profil de hauteur DE CONSIGNE enregistré et en ce qu'en cas de divergence entre le profil de hauteur RÉEL et le profil de hauteur DE CONSIGNE, la trajectoire de pliage programmée est adaptée de telle sorte que celle-ci est corrigée, dans la zone des valeurs divergentes, d'une différence entre la valeur RÉELLE et la valeur DE CONSIGNE dans la direction du profil de hauteur DE CONSIGNE et/ou
- **en ce que** le profil latéral RÉEL détecté par le dispositif de pliage et de mesure (1) est comparé à un profil latéral DE CONSIGNE enregistré et en ce qu'en cas de divergence entre le profil latéral RÉEL et le profil latéral DE CONSIGNE, la trajectoire de pliage programmée est adaptée de telle sorte que celle-ci est corrigée, dans la zone des valeurs divergentes, d'une différence entre la valeur RÉELLE et la valeur DE CONSIGNE dans la direction du profil latéral DE CONSIGNE.

10. Procédé selon au moins l'une quelconque des revendications 7 à 9, **caractérisé en ce que** la mesure est effectuée pendant le pliage.

11. Procédé selon au moins d'une quelconque des revendications 7 à 9, **caractérisé en ce que** la mesure est effectuée après le pliage et un parcours de mesure est réalisé pour cela après le pliage.
